(19) **Europäisches Patentamt / European Patent Office / Office européen des brevets**

(11) **EP 4 292 704 A1**

(12) # EUROPEAN PATENT APPLICATION
published in accordance with Art. 153(4) EPC

(43) Date of publication:
**20.12.2023 Bulletin 2023/51**

(21) Application number: **21925738.3**

(22) Date of filing: **19.08.2021**

(51) International Patent Classification (IPC):
*B01J 20/26* (2006.01)    *B01D 53/04* (2006.01)
*B01J 20/28* (2006.01)    *B01J 20/34* (2006.01)
*C01B 32/50* (2017.01)    *F24F 8/15* (2021.01)

(52) Cooperative Patent Classification (CPC):
**B01D 53/04; B01J 20/26; B01J 20/28; B01J 20/34;
C01B 32/50; F24F 6/08; F24F 8/15;** Y02C 20/40

(86) International application number:
**PCT/JP2021/030299**

(87) International publication number:
**WO 2022/172490 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.02.2021   JP 2021019319**

(71) Applicant: **Panasonic Intellectual Property
Management Co., Ltd.
Kadoma-shi, Osaka 571-0057 (JP)**

(72) Inventors:
• **NOBUNAGA, Masaki**
  **Kadoma-shi, Osaka 571-0057 (JP)**
• **KOMURA, Akiko**
  **Kadoma-shi, Osaka 571-0057 (JP)**
• **AKEYAMA, Yukako**
  **Kadoma-shi, Osaka 571-0057 (JP)**

(74) Representative: **Eisenführ Speiser
Patentanwälte Rechtsanwälte PartGmbB
Postfach 31 02 60
80102 München (DE)**

(54) **CARBON DIOXIDE ADSORPTION MATERIAL FOR AIR-CONDITIONING, ADSORPTION DEVICE, AND AIR-CONDITIONING DEVICE**

(57)    A carbon dioxide adsorbent for air conditioning contains a polymer compound that adsorbs and releases carbon dioxide reversibly, the polymer compound having a chemical structure containing a functional group containing an amino group having at least one substituent on nitrogen. The carbon dioxide adsorbent is porous.

FIG. 2

EP 4 292 704 A1

**Description**

**Technical Field**

The present disclosure relates to a carbon dioxide adsorbent for air conditioning, an adsorption device, and an air conditioner.

**Background Art**

Carbon dioxide adsorbents that adsorb and release carbon dioxide are known. As disclosed in Patent Literature 1, such a carbon dioxide adsorbent is included, for example, in an air conditioner and used for control of the carbon dioxide concentration in air. The air conditioner takes in indoor air and removes carbon dioxide from the air by means of the carbon dioxide adsorbent, thus accomplishing air cleaning. The carbon dioxide adsorbent is restored by releasing the carbon dioxide at a given time.

**Citation List**

**Patent Literature**

PTL 1: Japanese Laid-Open Patent Application Publication No. 2019-90546

**Summary of Invention**

The carbon dioxide adsorbent disclosed in Patent Literature 1 needs to be heated for restoration. The heating involves consumption of a considerable amount of energy. Additionally, there is a demand for a carbon dioxide adsorbent with an increased carbon dioxide adsorption capacity.
An object of the present disclosure is to increase the carbon dioxide adsorption capacity of a carbon dioxide adsorbent for air conditioning that reversibly adsorbs and releases carbon dioxide and allow for restoration of the carbon dioxide adsorbent with relatively low consumption of energy.
As a result of investigations by the present inventors, it has been found that when a porous carbon dioxide adsorbent is formed from a polymer compound having a chemical structure containing a functional group containing an amino group having at least one substituent on nitrogen, the adsorbent can adsorb a large amount of carbon dioxide contained in a gas onto the polymer compound and release the adsorbed carbon dioxide from the polymer compound at a relatively low temperature. The present disclosure is based on these findings.
That is, in order to solve the problem described above, a carbon dioxide adsorbent for air conditioning according to one aspect of the present disclosure contains a polymer compound that adsorbs and releases carbon dioxide reversibly, the polymer compound having a chemical structure containing a functional group containing an amino group having at least one substituent on nitrogen, wherein the carbon dioxide adsorbent is porous.
With the use of the carbon dioxide adsorbent having the above features, a large amount of carbon dioxide can be adsorbed by the polymer compound having a chemical structure containing a functional group containing an amino group having at least one substituent on nitrogen. Additionally, since the carbon dioxide adsorbent is porous, the area of contact of the carbon dioxide adsorbent with carbon dioxide can be increased. This allows the carbon dioxide adsorbent to adsorb a large amount of carbon dioxide. As stated above, the polymer compound can release the adsorbed carbon dioxide at a relatively low temperature. This allows for restoration of the carbon dioxide adsorbent with relatively low consumption of energy.
The pore volume may be 0.2 ml/g or more. The present inventors have confirmed that this feature makes it possible to reduce the extent to which the adsorption performance of the carbon dioxide adsorbent declines due to pore shrinkage occurring when the carbon dioxide adsorbent is heated for restoration. Thus, the carbon dioxide adsorbent can stably exhibit its carbon dioxide adsorption performance while being repeatedly restored.
The amino group of the functional group may be located at an end of a branched chain in the chemical structure. This can reduce the extent to which adsorption of carbon dioxide molecule by the amino group is inhibited by steric hindrance arising from the chemical structure of the polymer compound. As such, the carbon dioxide adsorbent can adsorb carbon dioxide with increased efficiency.
The chemical structure may contain an aromatic ring bonded directly or indirectly to the amino group. This makes it easy to position the aromatic ring close to the amino group. Thus, the hydrophobicity of the aromatic ring can reduce adsorption of water molecule contained in air onto the amino group which is hydrophilic. As such, the adsorption selectivity of the carbon dioxide adsorbent for carbon dioxide can be enhanced. Furthermore, since the reaction between the amino group and water molecule can be inhibited, the heating temperature at which the carbon dioxide adsorbent is heated for restoration can be lowered.

In the case where the chemical structure contains the aromatic ring, the molecular weight of the functional group may be in the range of 70 to 200. This allows the aromatic ring to readily exert its hydrophobicity on the amino group. Additionally, the amino group can be present at a suitable density in the carbon dioxide adsorbent.

The polymer compound may contain at least a backbone of a polystyrene resin.

The presence of the backbone of the polystyrene resin in the polymer compound can further improve the adsorption performance of the carbon dioxide adsorbent. Since polystyrene has a relatively high melting point, the presence of the polystyrene resin backbone in the polymer compound allows the carbon dioxide adsorbent to maintain a solid state in the temperature range over which the carbon dioxide adsorbent is used in an air conditioner. Thus, the handleability of the carbon dioxide adsorbent is better than when the carbon dioxide adsorbent is in another state such as a liquid state. Additionally, for example, volatilization of the carbon dioxide adsorbent in use can be reduced. Furthermore, the area of contact of the carbon dioxide adsorbent with carbon dioxide can be easily increased by changing the surface morphology of the carbon dioxide adsorbent.

The amine amount may be 2.0 mmol/g or more. In this case, the amino group can be present in a large amount in the carbon dioxide adsorbent. As such, the carbon dioxide adsorption performance of the carbon dioxide adsorbent can be further improved.

The carbon dioxide adsorbent may be a powder having an average particle size in the range of 300 $\mu$m to 1.3 mm. This can further increase the specific surface area of the carbon dioxide adsorbent. The increased specific surface area allows the carbon dioxide adsorbent to more easily contact carbon dioxide. As a result, the carbon dioxide adsorption performance of the carbon dioxide adsorbent can be improved well. Additionally, the fact that the average particle size of the carbon dioxide adsorbent can be set relatively large offers the following advantage: when, for example, the carbon dioxide adsorbent in the form of a powder is held by a holder in an adsorption device constructed using the carbon dioxide adsorbent, the amount of the carbon dioxide adsorbent falling off the adsorption device through air passage portions of the holder can be reduced. Thus, the handleability of the carbon dioxide adsorbent can be improved.

A stress at 10% deformation may be in the range of $5 \times 10^6$ Pa to $14 \times 10^6$ Pa. This allows the carbon dioxide adsorbent to have a suitable strength. Thus, for example, the carbon dioxide adsorbent can be prevented from being broken or chipped and falling off an adsorption device constructed using the carbon dioxide adsorbent. Additionally, setting the stress at deformation within the above range makes it possible to form the carbon dioxide adsorbent having a suitable density. As a result, the carbon dioxide adsorbent can have a desired porosity.

An adsorption device according to one aspect of the present disclosure includes the carbon dioxide adsorbent as defined above. An air conditioner according to one aspect of the present disclosure includes: the adsorption device; an air delivery mechanism that generates an air stream passing through the adsorption device; and a restoration mechanism that restores the carbon dioxide adsorbent of the adsorption device by allowing the carbon dioxide adsorbent to release carbon dioxide.

**Brief Description of Drawings**

FIG. 1 is a perspective view of an indoor unit of an air conditioner according to a first embodiment.
FIG. 2 shows a polymer compound contained in the carbon dioxide adsorbent of FIG. 1.
FIG. 3 shows a polymer compound according to a second embodiment.
FIG. 4 shows a polymer compound according to a third embodiment.
FIG. 5 shows a polymer compound according to a fourth embodiment.
FIG. 6 shows a polymer compound according to a fifth embodiment.
FIG. 7 shows a polymer compound according to a sixth embodiment.
FIG. 8 shows a polymer compound according to a seventh embodiment.
FIG. 9 shows a polymer compound according to an eighth embodiment.
FIG. 10 shows a polymer compound according to a ninth embodiment.
FIG. 11 shows a polymer compound according to a tenth embodiment.

**Description of Embodiments**

Hereinafter, embodiments will be described with reference to the drawings.

(First Embodiment)

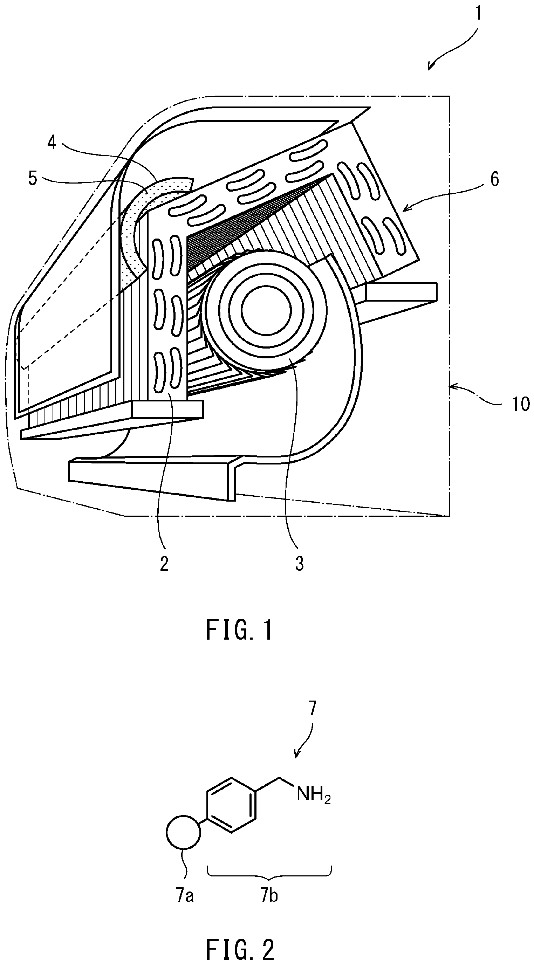

FIG. 1 is a perspective view of an indoor unit 10 of an air conditioner 1 according to a first embodiment. The air conditioner 1 shown in FIG. 1 controls the carbon dioxide concentration in indoor air. That is, the air conditioner 1 increases or decreases the carbon dioxide concentration in the indoor air. The air conditioner 1 includes, for example, the indoor unit 10 and an outdoor unit which is not shown. In the air conditioner 1, a refrigerant circulates between the indoor unit 10 and the outdoor unit. The indoor unit 10 includes: a heat exchanger 2 that effects heat exchange between the refrigerant and the indoor air; and an air delivery mechanism 3 that takes in the indoor air and that discharges the air after the heat exchange effected by the heat exchanger 2.

The indoor unit 10 further includes: an adsorption device 4 including a carbon dioxide adsorbent 5 for air conditioning; and a restoration mechanism 6 that restores the carbon dioxide adsorbent 5 of the adsorption device 4 by allowing the carbon dioxide adsorbent 5 to release carbon dioxide. As described in detail later, the indoor unit 10 removes carbon dioxide from the indoor air by the carbon dioxide adsorbent 5 adsorbing the carbon dioxide. The indoor unit 10 restores the carbon dioxide adsorbent 5 by the restoration mechanism 6 allowing the carbon dioxide adsorbent 5 to release the adsorbed carbon dioxide. Thus, the air conditioner 1 uses and restores the carbon dioxide adsorbent 5 repeatedly.

The restoration mechanism 6 heats the carbon dioxide adsorbent 5 to allow the carbon dioxide adsorbent 5 to release the adsorbed carbon dioxide. In the air conditioner 1 of the present embodiment, for example, the heat exchanger 2 and the air delivery mechanism 3 function together as the restoration mechanism 6. This eliminates the need for the air conditioner 1 to be equipped with an additional restoration mechanism for restoration of the carbon dioxide adsorbent 5. In the restoration of the carbon dioxide adsorbent 5, the heat exchanger 2 heats the air through heat exchange between the refrigerant and the air. The air delivery mechanism 3 delivers the heated air to the adsorption device 4.

For example, the adsorption device 4 is disposed in an air flow path located inside the indoor unit 10. The air delivery mechanism 3 uses the air flowing through the air flow path to generate an air stream passing through the adsorption device 4. The adsorption device 4 bears the carbon dioxide adsorbent 5. The adsorption device 4 includes a holder holding the carbon dioxide adsorbent 5 such that the carbon dioxide adsorbent 5 is contactable with the air. The adsorption device 4 is a filter that removes carbon dioxide from the air.

The carbon dioxide adsorbent 5 contains a polymer compound 7 (see FIG. 2) that reversibly adsorbs and releases carbon dioxide. The carbon dioxide adsorbent 5 is porous. The carbon dioxide adsorbent 5 adsorbs carbon dioxide by chemisorption. The carbon dioxide adsorption capacity of the carbon dioxide adsorbent 5 is, for example, in the range of 0.06 mol/kg to 3.91 mol/kg. In another example, the carbon dioxide adsorption capacity of the carbon dioxide adsorbent 5 is in the range of 2.0 mol/kg to 3.91 mol/kg. In yet another example, the carbon dioxide adsorption capacity of the carbon dioxide adsorbent 5 is in the range of 2.79 mol/kg to 3.91 mol/kg. The carbon dioxide adsorbent 5 releases the adsorbed carbon dioxide upon heating at a relatively low temperature (e.g., a temperature in the range of 40°C to 100°C). Thus, the carbon dioxide adsorbent 5 can be restored at a low temperature, and this can reduce the energy required for the restoration. It is also possible to reduce the extent to which the indoor unit 10 is affected by the temperature at which the carbon dioxide adsorbent 5 is heated.

For example, the carbon dioxide adsorbent 5 is a powder including spherical particles. The carbon dioxide adsorbent 5 of the present embodiment is a powder having an average particle size in the range of 300 $\mu$m to 1.3 mm. For example, the greater the average particle size of the carbon dioxide adsorbent 5 is, the better the handleability of the carbon dioxide adsorbent 5 is. For example, the smaller the average particle size of the carbon dioxide adsorbent 5 is, the larger the specific surface area of the carbon dioxide adsorbent 5 is. The average particle size can be measured by a method such as Coulter counter analysis, laser diffractometry, or image analysis. For example, in the case of Coulter counter analysis, the average particle size is calculated as a 50% volume mean diameter.

The carbon dioxide adsorbent 5 has a pore volume of 0.2 ml/g or more. The ensuring of a relatively large pore volume makes it easier to increase the carbon dioxide adsorption capacity of the carbon dioxide adsorbent 5 to as high as 2 mol/kg or more. The upper limit of the pore volume is, for example, 2 ml/g. The pore size of the carbon dioxide adsorbent 5 is in the range of 1 nm to 200 nm. The bulk density of the carbon dioxide adsorbent 5 is in the range of 0.3 $g/cm^3$ to 0.9 $g/cm^3$. The specific surface area of the carbon dioxide adsorbent 5 is in the range of 6 $m^2/g$ to 100 $m^2/g$.

In the carbon dioxide adsorbent 5 of the present embodiment, a stress at 10% deformation is in the range of $5 \times 10^6$ Pa to $14 \times 10^6$ Pa. The term "stress at 10% deformation" as used herein refers to an index of a deformation strength as measured against a compressive displacement corresponding to 10% of the particle size. The stress at 10% deformation of the carbon dioxide adsorbent 5 can be measured, for example, by the following method. The particles of the carbon dioxide adsorbent 5 are brought into a dry state by drying at normal temperature in a desiccator maintained at a humidity of 20% or lower, and the dried particles are taken out of the desiccator and subjected to the measurement within five days. The measurement is conducted using a fine particle-crushing strength measurement device ("NA-A 100" manufactured by Nano Seeds Corporation); specifically, the particles of the carbon dioxide adsorbent 5 are spread on a stage and compressed with a crushing needle to measure the compressive displacement and compressive deformation stress. In accordance with the method as specified in JIS Z 8844:2019, the compressive deformation stress is measured at the moment when the size of the particle of the carbon dioxide adsorbent 5 changes by 10%. After that, the measurement values are used to determine the stress at 10% deformation based on Equation 1 given below.

[Equation 1] Stress at 10% deformation (Pa) = compressive deformation stress (N) at 10% change of particle size/equivalent circle area (m²) determined from particle size measured before compression

The carbon dioxide adsorbent 5, in which the stress at 10% deformation is in the range of $5 \times 10^6$ Pa to $14 \times 10^6$ Pa, can be formed as a powder whose particles are less likely to fall off the adsorption device 4 and have a density such that the porosity is not significantly reduced.

As described above, the term "dry state" as used herein refers to the state of a material within five days after the material is dried at normal temperature in a desiccator maintained at a humidity of 20% or lower and taken out of the desiccator. That is, the "dry state" refers to the state of the carbon dioxide adsorbent 5 dried in a desiccator at normal temperature and a humidity of 20%. The "normal temperature" refers to a temperature in the range of 5°C to 35°C as specified in JIS Z 8703:1983.

FIG. 2 shows the polymer compound 7 contained in the carbon dioxide adsorbent 5 of FIG. 1. In FIG. 2, the structure of the polymer compound 7 is schematically shown along with a partial chemical structure. As shown in FIG. 2, the polymer compound 7 contained in the carbon dioxide adsorbent 5 has a chemical structure containing a functional group 7b containing an amino group having at least one substituent on nitrogen. Specifically, the polymer compound 7 contains a base compound 7a forming the molecular backbone and the functional group 7b chemically bonded to the base compound 7a and containing the amino group. The amino group is desirably a primary amino group, but may be a secondary amino group. The functional group 7b of the present embodiment contains, for example, a $CH_2$-$NH_2$ group. In the present embodiment, the functional group 7b is bonded as a side chain to the main chain of the base compound 7a. The base compound 7a contains a resin backbone composed of one or more resins. The base compound 7a of the present embodiment contains at least a backbone of a polystyrene (PS) resin as the resin backbone. As previously stated, the carbon dioxide adsorbent 5 is porous; thus, the functional group 7b is present also in the pores of the carbon dioxide adsorbent 5. As such, the carbon dioxide adsorbent 5 adsorbs carbon dioxide also inside the pores.

In the present embodiment, the amino group of the functional group 7b is located at the end of a branched chain in the chemical structure of the polymer compound 7. The chemical structure of the polymer compound 7 contains an aromatic ring (e.g., a benzene ring) bonded directly or indirectly to the amino group. In the carbon dioxide adsorbent 5, the hydrophobicity of the aromatic ring acts to make it difficult for water molecule to approach the amino group. For example, the distance between the aromatic ring and the amino group is desirably small. The branched chain may be derived from either a main chain of the chemical structure of the polymer compound 7 (e.g., the main chain of the base compound 7a) or a side chain of the chemical structure of the polymer compound 7. The polymer compound 7 of the present embodiment, which is shown in FIG. 2, can be said to be a solid polymer consisting of the base compound 7a to which benzylamine (BZA) is bonded. The carbon dioxide adsorption capacity of the carbon dioxide adsorbent 5 made with the polymer compound 7 is in the range of 2.79 mol/kg to 3.91 mol/kg.

The polymer compound 7 has a structure in which an amino group is bonded to the base compound 7a forming the molecular backbone via a hydrophobic group (e.g., an aromatic ring) more hydrophobic than the amino group. Thus, the carbon dioxide adsorbent 5 can be restored at a relatively low temperature thanks to the action of the hydrophobic group. Additionally, the carbon dioxide adsorbent 5 is maintained in a solid state in the operation temperature range of the air conditioner 1. Thus, decomposition or volatilization of the amino group is prevented when the carbon dioxide adsorbent 5 is heated for restoration. Furthermore, since the carbon dioxide adsorbent 5 is maintained in a solid state in the operation temperature range of the air conditioner 1, there is no need, for example, to use any binder for bonding and holding the polymer compound 7. As such, the carbon dioxide adsorbent 5 can avoid an adsorption performance decline arising from the pores of the carbon dioxide adsorbent 5 being closed by the binder.

In the carbon dioxide adsorbent 5 of the present embodiment, the amine amount is 2.0 mmol/g or more. In another example, the amine amount of the carbon dioxide adsorbent 5 is 2.5 mmol/g or more. This ensures the increased carbon dioxide adsorption capacity of the carbon dioxide adsorbent 5. The amine amount of the carbon dioxide adsorbent 5 can be measured, for example, by quantitative analysis such as titration or by CHN elemental analysis.

Specifically, in the CHN elemental analysis, the measurement object is burned with oxygen to produce $H_2O$, $CO_2$, and $NO_x$. The $NO_x$ is reduced into $N_2$. The $H_2O$, $CO_2$, and $N_2$ gases are separated by means of columns, and individually introduced into a detector (thermal conductivity detector, abbreviated as TCD). The carbon, hydrogen, and nitrogen contents of the measurement object are measured in this manner, and the amine amount is calculated from the measurement results. In the CHN elemental analysis, the amine amount is calculated based on Equations 2 and 3 given below when the amino group is an $NH_2$ group.

[Equation 2] Primary amine content (% by weight) of measurement object =

nitrogen content (% by weight) of measurement object × 16 (molecular weight of $NH_2$)/{14

(atomic weight of nitrogen) × number of nitrogen atoms in functional group}

[Equation 3] Amine amount (mmol/g) = primary amine content (% by weight) of

measurement object/{16 (molecular weight of $NH_2$) × 100} × 1000

The carbon dioxide adsorbent 5 is desirably held by the adsorption device 4 such that the carbon dioxide adsorbent 5 is in contact with a gas over a wide area. Thus, the adsorption device 4 may include a flow path through which the gas (air) flows in such a manner as to contact the carbon dioxide adsorbent 5 continuously.

The air conditioner 1 is operated, for example, in either a first mode where the carbon dioxide concentration in indoor air is decreased or a second mode where the carbon dioxide concentration in indoor air is increased. During the operation in the first mode, the indoor air is delivered by the air delivery mechanism 3 towards the carbon dioxide adsorbent 5 in the indoor unit 10. Thus, the carbon dioxide adsorbent 5 adsorbs carbon dioxide contained in the air. The adsorption of the indoor carbon dioxide by the carbon dioxide adsorbent 5 decreases the indoor carbon dioxide concentration to, for example, 1000 ppm or less. During the operation in the second mode, the carbon dioxide adsorbent 5 is restored by the restoration mechanism 6 and releases the adsorbed carbon dioxide. This increases the indoor carbon dioxide concentration.

As described above, it is possible to increase the carbon dioxide adsorption capacity of a carbon dioxide adsorbent for air conditioning that reversibly adsorbs and releases carbon dioxide and allow for restoration of the carbon dioxide adsorbent with relatively low consumption of energy. With the use of the carbon dioxide adsorbent 5 for air conditioning which has the above features, a large amount of carbon dioxide can be adsorbed by the polymer compound 7 having a chemical structure containing the functional group 7b containing an amino group having at least one substituent on nitrogen. Additionally, since the carbon dioxide adsorbent 5 is porous, the area of contact of the carbon dioxide adsorbent 5 with carbon dioxide can be increased. This allows the carbon dioxide adsorbent 5 to adsorb a large amount of carbon dioxide. Furthermore, as previously stated, the polymer compound 7 can release the adsorbed carbon dioxide at a relatively low temperature. This allows for restoration of the carbon dioxide adsorbent 5 with relatively low consumption of energy.

The pore volume of the carbon dioxide adsorbent 5 of the present embodiment is 0.2 ml/g or more. The present inventors have confirmed that this feature makes it possible to reduce the extent to which the adsorption performance of the carbon dioxide adsorbent 5 declines due to pore shrinkage occurring when the carbon dioxide adsorbent 5 is heated for restoration. Thus, the carbon dioxide adsorbent 5 can stably exhibit its carbon dioxide adsorption performance while being repeatedly restored.

The amino group of the functional group 7b of the polymer compound 7 is located at the end of a branched chain in the chemical structure of the polymer compound 7. This can reduce the extent to which adsorption of carbon dioxide molecule by the amino group is inhibited by steric hindrance arising from the chemical structure of the polymer compound 7. As such, the carbon dioxide adsorbent 5 can adsorb carbon dioxide with increased efficiency.

The chemical structure of the polymer compound 7 contains an aromatic ring bonded directly or indirectly to the amino group. This makes it easy to position the aromatic ring close to the amino group. Thus, the hydrophobicity of the aromatic ring can reduce adsorption of water molecule contained in air onto the amino group which is hydrophilic. As such, the adsorption selectivity of the carbon dioxide adsorbent 5 for carbon dioxide can be enhanced. Furthermore, since the reaction between the amino group and water molecule can be inhibited, the heating temperature at which the carbon dioxide adsorbent 5 is heated for restoration can be lowered.

In the polymer compound 7, the molecular weight of the functional group 7b is in the range of 70 to 200. This allows the aromatic ring to readily exert its hydrophobicity on the amino group. Additionally, the amino group can be present at a suitable density in the carbon dioxide adsorbent 5. Furthermore, since the lower limit of the molecular weight of the functional group 7b is 70, the carbon dioxide adsorption capacity of the carbon dioxide adsorbent 5 can be easily set as high as 2 mol/kg or more.

The polymer compound 7 contains at least a backbone of a polystyrene resin. This can further improve the adsorption performance of the carbon dioxide adsorbent 5. Since polystyrene has a relatively high melting point, the presence of the polystyrene resin backbone in the polymer compound 7 allows the carbon dioxide adsorbent 5 to maintain a solid state in the temperature range over which the carbon dioxide adsorbent 5 is used in the air conditioner 1. Thus, the handleability of the carbon dioxide adsorbent 5 is better than when the carbon dioxide adsorbent 5 is in another state such as a liquid state. Additionally, for example, volatilization of the carbon dioxide adsorbent 5 in use can be reduced. Furthermore, the area of contact of the carbon dioxide adsorbent 5 with carbon dioxide can be easily increased by changing the surface morphology of the carbon dioxide adsorbent 5.

In the carbon dioxide adsorbent 5 of the present embodiment, the amine amount is 2.0 mmol/g or more. Thus, the amino group can be present in a large amount in the carbon dioxide adsorbent 5. As such, the carbon dioxide adsorption performance of the carbon dioxide adsorbent 5 can be further improved.

For example, the carbon dioxide adsorbent 5 is a powder having an average particle size in the range of 300 $\mu$m to 1.3 mm. This can further increase the specific surface area of the carbon dioxide adsorbent 5. The increased specific surface area allows the carbon dioxide adsorbent 5 to more easily contact carbon dioxide. As a result, the carbon dioxide adsorption performance of the carbon dioxide adsorbent 5 can be improved well. Additionally, the fact that the average particle size of the carbon dioxide adsorbent 5 can be set relatively large offers the following advantage: when, for example, the carbon dioxide adsorbent 5 in the form of a powder is held by a holder in the adsorption device 4 constructed using the carbon dioxide adsorbent 5, the amount of the carbon dioxide adsorbent 5 falling off the adsorption device 4 through air passage portions of the holder can be reduced. Thus, the handleability of the carbon dioxide adsorbent 5 can be improved.

In the carbon dioxide adsorbent 5, for example, the stress at 10% deformation is in the range of $5 \times 10^6$ Pa to $14 \times 10^6$ Pa. This allows the carbon dioxide adsorbent 5 to have a suitable strength. Thus, for example, the carbon dioxide adsorbent 5 can be prevented from being broken or chipped and falling off the adsorption device 4 constructed using the carbon dioxide adsorbent 5. Additionally, setting the stress at deformation within the above range makes it possible to form the carbon dioxide adsorbent 5 having a suitable density. As a result, the carbon dioxide adsorbent 5 can have a desired porosity.

When the indoor carbon dioxide concentration is kept low by the air conditioner 1, carbon dioxide evolved during restoration of the carbon dioxide adsorbent 5 may be discharged to the outdoor environment. Hereinafter, other embodiments of the polymer compound contained in the carbon dioxide adsorbent 5 will be described.

(Other Embodiments)

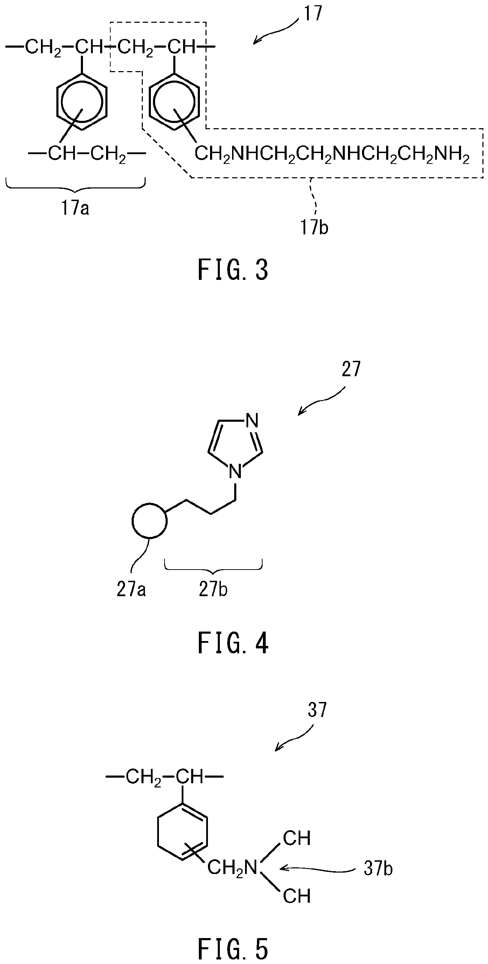

FIG. 3 shows a polymer compound 17 according to a second embodiment. The polymer compound 17 shown in FIG. 3 includes a base compound 17a forming the molecular backbone and a linear side chain containing a functional group 17b. The base compound 17a contains at least a backbone of a polystyrene (PS) resin as the resin backbone. An amino group having at least one substituent on nitrogen is located at the end of a branched chain in the chemical structure of the polymer compound 17. Thus, in the polymer compound 17, the extent to which the steric hindrance of the chemical structure inhibits carbon dioxide molecule from approaching the amino group is reduced as in the polymer compound 7. This allows the polymer compound 17 to readily exhibit the carbon dioxide adsorption performance.

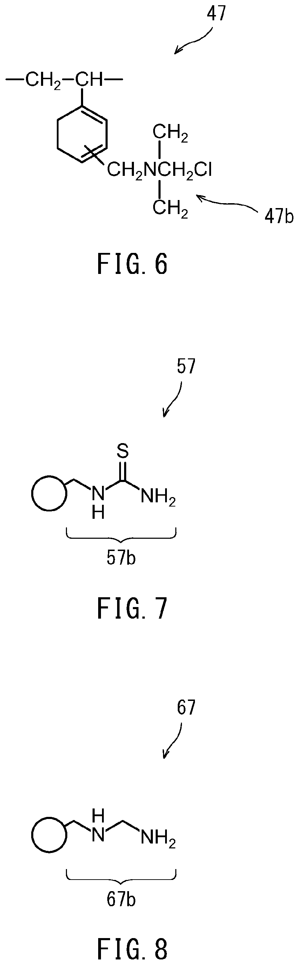

FIG. 4 shows a polymer compound 27 according to a third embodiment. FIG. 5 shows a polymer compound 37 shows a polymer compound 37 according to a fourth embodiment. FIG. 6 shows a polymer compound 47 according to a fifth embodiment. The polymer compounds 27, 37, and 47 contain functional groups 27b, 37b, and 47b, respectively, and each of the functional groups 27b, 37b, and 47b contains a tertiary amino group.

FIG. 7 shows a polymer compound 57 according to a sixth embodiment. FIG. 8 shows a polymer compound 67 according to a seventh embodiment. The polymer compounds 57 and 67 contain functional groups 57b and 67b, respectively, and each of the functional groups 57b and 67b contains a primary amino group. The chemical structure of each of the polymer compounds 57 and 67 does not contain any aromatic ring. The amino group of each of the polymer compounds 57 and 67 is located at the end of a branched chain in the chemical structure of the polymer compound 57 or 67.

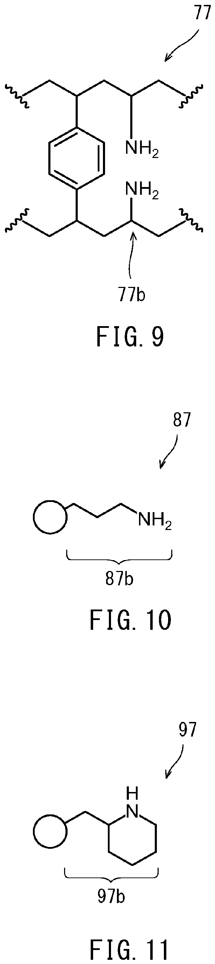

FIG. 9 shows a polymer compound 77 according to an eighth embodiment. The chemical structure of the polymer compound 77 includes a structure as shown in FIG. 9. The polymer compound 77 contains a functional group 77b, which contains a primary amino group. The amino group is located within a branched chain in the chemical structure of the polymer compound 77. The branched chain may be linear, or another chain may be further branched from the branched chain.

FIG. 10 shows a polymer compound 87 according to a ninth embodiment. FIG. 11 shows a polymer compound 97 according to a tenth embodiment. Each of the polymer compounds 87 and 97 has a resin backbone including a polyurethane (PU) resin. The polymer compound 87 contains a functional group 87b, which contains a primary amino group. The polymer compound 97 contains a functional group 97b, which contains a secondary amino group. As in the polymer compound 97, the functional group 97b may have a heterocyclic structure containing the nitrogen atom of the amino group.

The present disclosure is not limited to the embodiments described above, and changes, additions, or deletions may be made without departing from the gist of the present disclosure. The carbon dioxide adsorbent for air conditioning and the air conditioner are not limited to indoor use and may be used for any other purposes. For example, the carbon dioxide adsorbent and the air conditioner may be used for exhaust gas treatment in a factory, may be used in an agricultural facility, or may be mounted on a vehicle. When the adsorbent is a powder, the particles of the adsorbent need not have the same shape or size.

EP 4 292 704 A1

**Reference Signs List**

| | |
|---|---|
| 1 | air conditioner |
| 3 | air delivery mechanism |
| 4 | adsorption device |
| 5 | carbon dioxide adsorbent |
| 6 | restoration mechanism |
| 7, 17, 27, 37, 47, 57, 67, 77, 87, 97 | polymer compound |
| 7b, 17b, 27b, 37b, 47b, 57b, 67b, 77b, 87b, 97b | functional group |

**Claims**

1. A carbon dioxide adsorbent for air conditioning, comprising:

   a polymer compound that adsorbs and releases carbon dioxide reversibly, the polymer compound having a chemical structure containing a functional group containing an amino group having at least one substituent on nitrogen, wherein
   the carbon dioxide adsorbent is porous.

2. The carbon dioxide adsorbent for air conditioning according to claim 1, wherein a pore volume is 0.2 ml/g or more.

3. The carbon dioxide adsorbent for air conditioning according to claim 1 or 2, wherein the amino group of the functional group is located at an end of a branched chain in the chemical structure.

4. The carbon dioxide adsorbent for air conditioning according to any one of claims 1 to 3, wherein the chemical structure contains an aromatic ring bonded directly or indirectly to the amino group.

5. The carbon dioxide adsorbent for air conditioning according to any one of claims 1 to 4, wherein a molecular weight of the functional group is in the range of 70 to 200.

6. The carbon dioxide adsorbent for air conditioning according to any one of claims 1 to 5, wherein the polymer compound contains at least a backbone of a polystyrene resin.

7. The carbon dioxide adsorbent for air conditioning according to any one of claims 1 to 6, wherein an amine amount is 2.0 mmol/g or more.

8. The carbon dioxide adsorbent for air conditioning according to any one of claims 1 to 7, wherein the carbon dioxide adsorbent is a powder having an average particle size in the range of 300 $\mu$m to 1.3 mm.

9. The carbon dioxide adsorbent for air conditioning according to any one of claims 1 to 8, wherein a stress at 10% deformation is in the range of $5 \times 10^6$ Pa to $14 \times 10^6$ Pa.

10. An adsorption device comprising the carbon dioxide adsorbent for air conditioning according to any one of claims 1 to 9.

11. An air conditioner comprising:

    the adsorption device according to claim 10;
    an air delivery mechanism that generates an air stream passing through the adsorption device; and

a restoration mechanism that restores the carbon dioxide adsorbent of the adsorption device by allowing the carbon dioxide adsorbent to release carbon dioxide.

FIG. 1

FIG. 2

—CH$_2$—CH—CH$_2$—CH—    17

—CH—CH$_2$—    CH$_2$NHCH$_2$CH$_2$NHCH$_2$CH$_2$NH$_2$

17a

17b

FIG. 3

27

27a    27b

FIG. 4

37

—CH$_2$—CH—

CH$_2$N    37b

FIG. 5

47

$$-CH_2-CH-$$

$$CH_2N \overset{\displaystyle CH_2}{\underset{\displaystyle CH_2}{\overset{|}{\underset{|}{N}}}} CH_2Cl$$

47b

FIG. 6

57

57b

FIG. 7

67

67b

FIG. 8

77

77b

FIG. 9

87

87b

FIG. 10

97

97b

FIG. 11

## INTERNATIONAL SEARCH REPORT

| | International application No. |
|---|---|
| | **PCT/JP2021/030299** |

**A.    CLASSIFICATION OF SUBJECT MATTER**

*B01J 20/26*(2006.01)i; *B01D 53/04*(2006.01)i; *B01J 20/28*(2006.01)i; *B01J 20/34*(2006.01)i; *C01B 32/50*(2017.01)i; *F24F 8/15*(2021.01)i
FI:    B01J20/26 A; B01D53/04 230; B01J20/28 Z; B01J20/34 F; C01B32/50; F24F8/15

According to International Patent Classification (IPC) or to both national classification and IPC

**B.    FIELDS SEARCHED**

Minimum documentation searched (classification system followed by classification symbols)

B01J20/00-20/34, B01D53/02-53/18, C01B32/50, F24F8/15

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 47-025596 B1 (MINE SAFETY APPLIANCES CO) 12 July 1972 (1972-07-12) claims, column 1, line 31 to column 9, line 4 | 1-11 |
| A | JP 63-059339 A (SUMITOMO HEAVY IND LTD) 15 March 1988 (1988-03-15) | 1-11 |
| A | WO 2004/094040 A1 (ORGANO CORPORATION) 04 November 2004 (2004-11-04) | 1-11 |

☐ Further documents are listed in the continuation of Box C.          ☑ See patent family annex.

| *  Special categories of cited documents: | "T" later document published after the international filing date or priority date and not in conflict with the application but cited to understand the principle or theory underlying the invention |
|---|---|
| "A"  document defining the general state of the art which is not considered to be of particular relevance | |
| "E"  earlier application or patent but published on or after the international filing date | "X" document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&" document member of the same patent family |
| "P"  document published prior to the international filing date but later than the priority date claimed | |

| Date of the actual completion of the international search | Date of mailing of the international search report |
|---|---|
| **05 October 2021** | **19 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/030299**

| Patent document cited in search report | | | Publication date (day/month/year) | Patent family member(s) | | | Publication date (day/month/year) |
|---|---|---|---|---|---|---|---|
| JP | 47-025596 | B1 | 12 July 1972 | (Family: none) | | | |
| JP | 63-059339 | A | 15 March 1988 | (Family: none) | | | |
| WO | 2004/094040 | A1 | 04 November 2004 | US | 2007/0175329 | A1 | |
| | | | | CN | 1777467 | A | |
| | | | | EP | 1621244 | A1 | |
| | | | | JP | 2004-321930 | A | |
| | | | | KR | 10-2006-0003058 | A | |
| | | | | TW | 200425939 | A | |

Form PCT/ISA/210 (patent family annex) (January 2015)

**REFERENCES CITED IN THE DESCRIPTION**

**Patent documents cited in the description**

- JP 2019090546 A